(19) **Europäisches Patentamt / European Patent Office / Office européen des brevets**

(11) **EP 3 861 225 B1**

(12) **EUROPEAN PATENT SPECIFICATION**

(45) Date of publication and mention of the grant of the patent:
**07.06.2023 Bulletin 2023/23**

(21) Application number: **19795654.3**

(22) Date of filing: **04.10.2019**

(51) International Patent Classification (IPC):
**F16D 41/07** (2006.01)   **F16D 41/08** (2006.01)
**F16D 41/10** (2006.01)   **F16D 21/06** (2006.01)

(52) Cooperative Patent Classification (CPC):
**F16D 41/10; F16D 21/06; F16D 41/07; F16D 41/084**

(86) International application number:
**PCT/IB2019/058482**

(87) International publication number:
**WO 2020/070712 (09.04.2020 Gazette 2020/15)**

(54) **DEVICE FOR THE SELECTIVE TRANSMISSION OF DRIVING TORQUES**

VORRICHTUNG ZUR SELEKTIVEN ÜBERTRAGUNG VON ANTRIEBSDREHMOMENTEN

DISPOSITIF DE TRANSMISSION SÉLECTIVE DE COUPLES D'ENTRAÎNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.10.2018 IT 201800009204**

(43) Date of publication of application:
**11.08.2021 Bulletin 2021/32**

(73) Proprietor: **Scuola Superiore di Studi Universitari e di Perfezionamento Sant'Anna
56127 Pisa (IT)**

(72) Inventors:
• **BALDONI, Andrea
  56025 Pontedera (PI) (IT)**
• **FANTOZZI, Matteo
  55049 Viareggio (LU) (IT)**
• **VITIELLO, Nicola
  56025 Pontedera (PI) (IT)**

(74) Representative: **ABM Agenzia Brevetti & Marchi
Viale Giovanni Pisano, 31
56123 Pisa (IT)**

(56) References cited:
AT-B- 396 972          US-A- 4 373 407
US-A1- 2003 183 473

## Description

Field of the invention

The present invention relates to a device for the selective transmission of torques.

Description of the prior art

As well known, in mechanical is very frequent the need for devices capable of transmitting torques and/or angular speeds between different components of a kinematical chain, such as between a drive shaft and a wheel, or between an actuator and a robotic joint.

It is also often required that these devices can allow to decide whether to connect or disconnect the components between which this rotary motion transmission is to be carried out, for example for safety reasons or to selectively connect a source of drive torque to different outputs (eg automotive clutches).

Moreover, since these devices substantially affect the overall weight and reliability of a mechanical transmission, one of the essential objectives in their design is to identify simple solutions, which make use of few components, and which at the same time guarantee high efficiency in the transmission of motion.

A possible device of this type is disclosed in EP0213291, wherein a free-wheel device is claimed that comprises a plurality of elements ("*sprags*") having clamping surfaces suitable for connecting a guide element and a guided element by friction, so as to transmit a torque, both in one sense and in the other, between the two elements.

However, this device does not allow in any way the selective or simultaneous connection of the guide element to more than one guided element, for example preventing the use of the same actuator for more shafts or more joints.

Moreover, the device is complex and not very reliable, above all due to the fragility of the elastic tabs, which are necessary to keep the guide element and the guided element disconnected from each other until a sufficient force is applied to it.

The same considerations made by EP0213291 are also valid for devices described in US4373407, AT396972 and US2003183473.

Summary of the invention

It is therefore a feature of the present invention to provide a device for the selective transmission of torques that allows to transmit a rotary motion, in a simple and effective manner, between two elements of a kinematic chain.

It is also a feature of the present invention to provide such a device which allows the two elements to be connected and disconnected according to requirements.

It is still a feature of the present invention to provide such a device which allows to connect a rotating input element, selectively or simultaneously, to a plurality of output elements.

These and other objects are achieved by a device for the selective transmission of torques according to claims from 1 to 8.

Brief description of the drawings

Further characteristic and/or advantages of the present invention are more bright with the following description of an exemplary embodiment thereof, exemplifying but not limitative, with reference to the attached drawings in which:

- Fig. 1 shows a perspective view of a first exemplary embodiment of the device for the selective transmission of torques, according to the present invention, where it is present a single receiving element and a single rotating element;
- Fig. 1A shows a front view of the exemplary embodiment Fig. 1;
- Fig. 1B shows a front view of a variant of the exemplary embodiment Fig. 1, wherein two single rotating elements are provided symmetrically arranged;
- Fig. 1C shows a front view of a variant of the exemplary embodiment Fig. 1, wherein it is present a "C" type rotating element;
- Fig. 2 shows a perspective view of a second exemplary embodiment of the device for the selective transmission of torques, according to the present invention, wherein two receiving elements and a "S" type rotating element are provided;
- Fig. 2A shows a front view of the exemplary embodiment Fig. 2;
- Fig. 2B shows a front view of a variant of the exemplary embodiment Fig. 2, wherein two "S" type rotating elements are provided symmetrically arranged;
- Fig. 2C shows a front view of a variant of the exemplary embodiment Fig. 1, wherein it is present a single rotating element and a "C" type rotating element;
- Fig. 3 shows a perspective view of a third exemplary embodiment of the device for the selective transmission of torques, according to the present invention, wherein two receiving elements and two rotating elements are provided arranged on a single shaft;
- Fig. 3A shows a perspective view of the connection means of the exemplary embodiment of Fig. 3;
- Fig. 4 shows a perspective view of a fourth exemplary embodiment of the device for the selective transmission of torques, according to the present invention, wherein two receiving elements and four rotating elements are provided arranged on two shafts;
- Fig. 5 shows a perspective view of a fifth exemplary embodiment of the device for the selective transmission of torques, according to the present invention, wherein four receiving elements and two rotating elements are provided arranged on a single shaft;
- Fig. 6 shows a perspective view of a sixth exemplary embodiment of the device for the selective transmission of torques, according to the present invention, wherein four receiving elements and four rotating elements are provided arranged on two shafts;
- Fig. 7 shows, in a front view, a possible mechanical embodiment of the device for the selective transmission of torques, according to the present invention;
- Fig. 7A shows a cross sectional view of the exemplary embodiment of Fig. 7;
- Figs. 8A, 8B and 8C show, respectively, a perspective view, side and front of the connection means usable in the exemplary embodiment of Fig. 7.

Description of a preferred exemplary embodiment

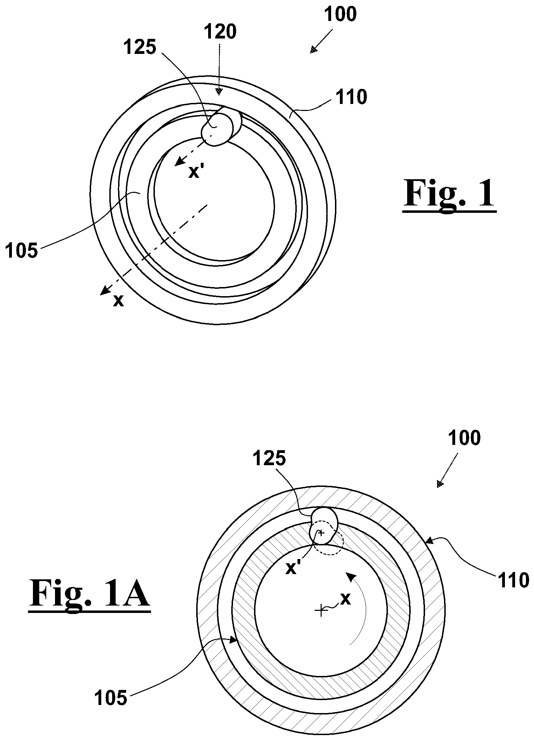

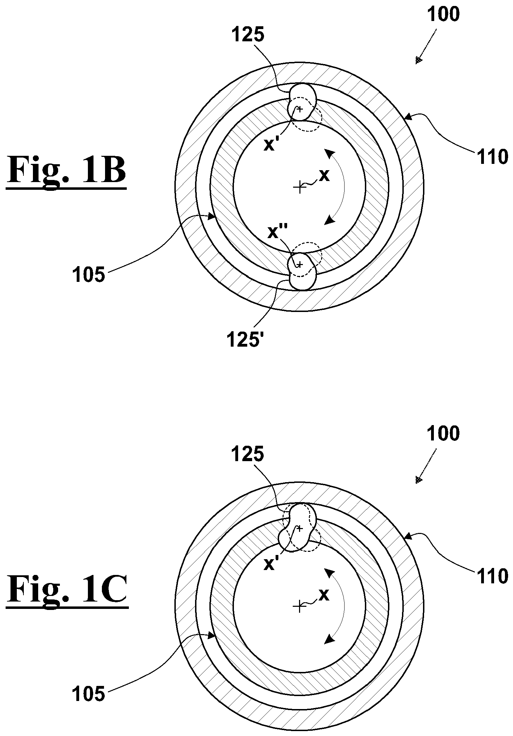

With reference to Figs. 1 and 1A, in a first exemplary embodiment, the device 100 for the selective transmission of torques comprises an inlet arranged to provide an inlet torque $Q$ and an outlet arranged to express an outlet torque $T_1$.

In particular, the inlet comprises a transmission element 105, having annular shape, arranged to rotate with speed $\omega$ about a rotation axis $x$, whereas the outlet comprises a receiving element 110, also having annular shape, arranged to rotate with speed $\vartheta_1$ about the same rotation axis $x$.

The device 100 comprises then connection means 120 arranged to pass between a disengagement configuration and an engagement configuration.

According to the invention and with particular reference to Fig. 1A, the connection means 120 comprises a rotating element 125 engaged to the transmission element 105 and arranged to rotate about a rotation axis $x'$ for causing the device 100 to pass between the engagement configuration and the disengagement configuration. In Fig. 1A the rotating element 125 is shown with a continuous line in the engagement configuration and with a dotted line in the disengagement configuration.

In particular, in the exemplary embodiment of Fig. 1 and 1A, the rotating element 125 is a single rotating element, i.e. having a first semi-circular end and a second end with a logarithmic spiral-shaped profile.

According to the invention, in the engagement configuration the rotating element 125 is clamped by friction to the inner wall of the receiving element 110 when the transmission element 105 rotates counter-clockwise, allowing to transfer both the inlet torque $Q$ and the angular speed $\omega$ from the inlet to the outlet. In the engagement configuration, therefore, the receiving element 110 rotates with angular speed $\vartheta_1 = \omega$ about its axis $x$ and expresses an outlet torque $T_1 = Q$.

With respect to other geometries, the logarithmic spiral geometry allows a transmission most effective of the angular moment, since the force of friction given by the clamping increases with the rotation: this causes the generation of a totally stable connection between the transmission element 105 and the receiving element 110 until the rotating element 125 is not rotated about its rotation axis $x'$ to pass to the disengagement configuration.

In Fig. 1B a variant of the device 100 of Fig. 1 is shown, wherein two single rotating elements 125 and 125' are provided, similar to those of Fig. 1A.

The two elements 125 and 125' are symmetrically arranged with respect to the axis $x$ so that, in the engagement configuration, the rotating element 125 is clamped by friction to the inner wall of the receiving element 110 when the transmission element 105 rotates counter-clockwise, and the rotating element 125' is clamped by friction to the inner wall of the receiving element 110 when the transmission element 105 rotates clockwise. Such exemplary embodiment allows therefore to transfer both the inlet torque $Q$ and the angular speed $\omega$ from the inlet to the outlet in both the rotation directions.

In Fig. 1C a variant of the device 100 of Fig. 1 is shown, wherein a type "C" rotating element 125 is provided, i.e. having the ends both with a logarithmic spiral-shaped profile and symmetrical to each other with respect to the rotation axis $x'$. By rotating this rotating element 125 and bringing it between two positions, as shown in Fig. 1C with a continuous line and with a dotted line, it is possible to transfer, as in the embodiment of Fig. 1B, the inlet torque $Q$ and the angular speed $\omega$ in both the rotation directions, but using only one rotating element 125.

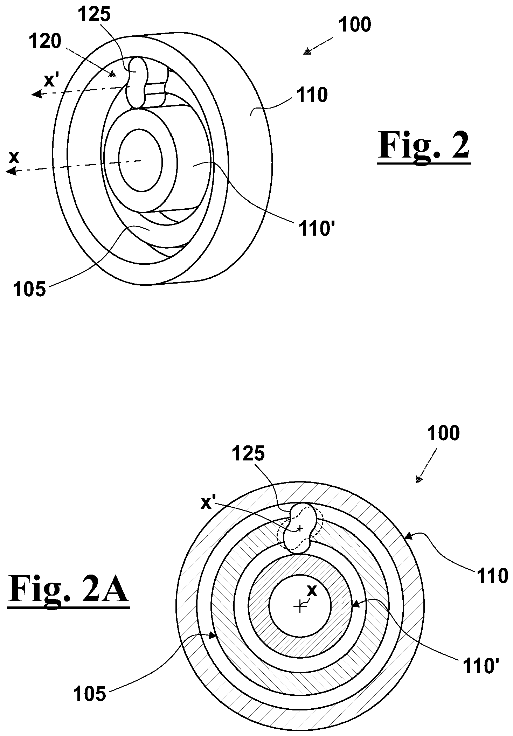

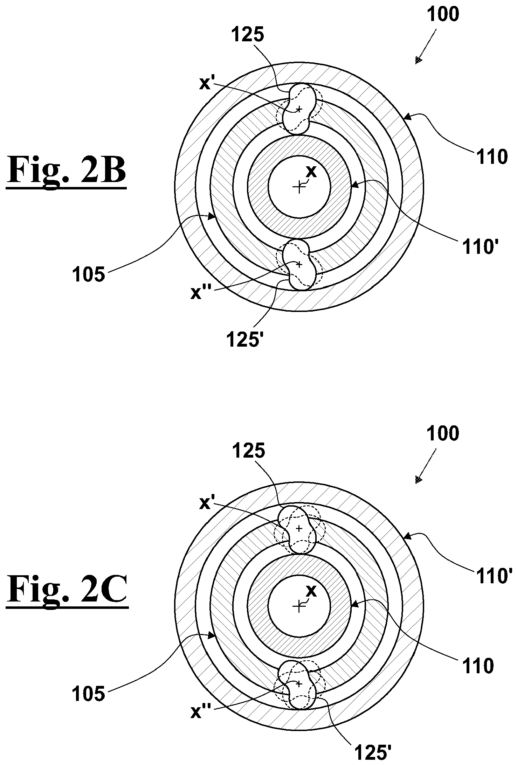

In the figures 2 and 2A a second exemplary embodiment of the device 100is shown, wherein an inlet, similar to that of Fig. 1, and two outlets are provided arranged to express respective outlet torques $T_1$ and $T_2$.

The two outlets comprise respective receiving elements 110 and 110', both having annular shape, concentric to each other and arranged to rotate about the axis $x$ with angular speeds $\vartheta_1$ and $\vartheta_2$.

In this exemplary embodiment, the connection means 120 comprises a "S" type rotating element 125, i.e. having the ends both with a logarithmic spiral-shaped profile and antisymmetric to each other with respect to the rotation axis $x'$.

This allows that, in the engagement configuration, the rotating element 125 is clamped by friction to the inner wall of the receiving element 110 when the transmission element 105 rotates in a first direction and that it is clamped to the external wall of the receiving element 110' when the transmission element 105 rotates in the opposite direction. In the first case, we will have $\vartheta_1 = \omega$, $\vartheta_2 = 0$, $T_1 = Q$, $T_2 = 0$, whereas in the second we will have $\vartheta_1 = 0$, $\vartheta_2 = \omega$, $T_1 = 0$, $T_2 = Q$.

Clearly, the rotating element 125 can be located in order to be clamped in the desired direction.

In the exemplary embodiment of Fig. 2B, instead, two "S" type rotating elements 125 and 125' are provided arranged symmetrically with respect to the axis $x$. The way the two elements 125 and 125' are arranged in Fig. 2B, when, in the engagement configuration, the transmission element 105 rotates counter-clockwise the rotating element 125 is clamped by friction to the inner wall of the receiving element 110 and, at the same time, the rotating element 125' is clamped to the external wall of the receiving element 110'. Conversely, it occurs when the transmission element 105 rotates clockwise. This way, the inlet can transmit both the torque and the angular speed to both the outlets at the same time and in both the directions of rotation.

In particular, in the engagement configuration we will have $Q = T_1 + T_2$ and $\omega = \vartheta_1 = \vartheta_2$. It is obviously possible to arrange only one of the rotating elements 125,125' in contact with an outlet, leaving the other in a position not engaged, so that the device 100 acts similarly to the exemplary embodiment of Fig. 2A.

In Fig. 2C a further variant of the exemplary embodiment of Fig. 2 is shown, wherein two rotating elements 125 and 125' are provided.

In particular, each "C" type rotating element can be arranged in the three positions shown in the figure with a continuous line and a dotted line:

- in contact with a receiving element with the logarithmic spiral profile in a first direction;
- in contact with a receiving element with the logarithmic spiral profile in the opposite direction;
- not in contact with a receiving element.

Therefore, suitably positioning the rotating elements 125 and 125', it is possible to connect the inlet alternatively to the first outlet, to the second outlet, to both the outlets or to none, both in a direction of rotation and in the another one.

Although not shown in the figure for simplicity, it is meant that here are described all the exemplary embodiments in which the variants of the rotating elements 125 and 125' shown in the preceding figures are combined. It is in fact possible to replace each rotating element 125 or 125' with a rotating element single type, "C" type or "S" type, positioning it in the most appropriate way, in order to allow the selective transmission of the torque $Q$ and of the angular speed $\omega$ to the outlet or to the outlets desired.

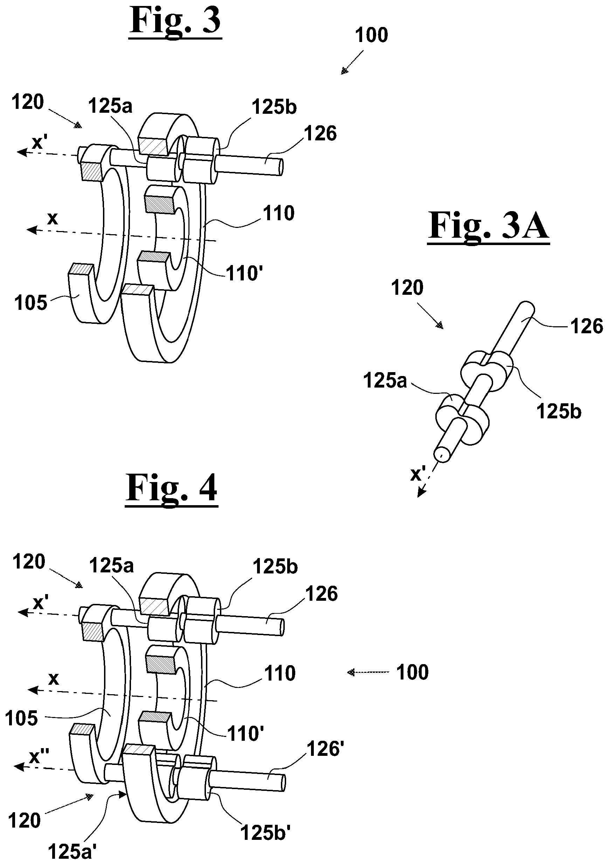

In Fig. 3 a further exemplary embodiment of the device 100 is shown, wherein there are two receiving elements 110 and 110', and where the connection means comprises a shaft 126 on which two rotating elements 125a and 125b are arranged. The shaft rotates about its rotation axis x', in order to cause the rotation of the rotating elements 125a and 125b about this axis.

As best seen in Fig. 3A, the two elements 125a and 125b can be of various type, for example one "C" type and one "S" type. Alternatively, they can be of the same type, but having opposite directions. The shaft 126 can translate along the axis x', in order to dispose in the engagement position one rotating element 125 or the other one or none of the two.

It is also possible to place more than two rotating elements 125 on the same shaft 126, of each type and with each aforementioned direction, to allow a multiplicity of motion transmission configurations, by translating the shaft 126.

In Fig. 4 an exemplary embodiment of the device 100 is shown which joins the embodiments of figures 2 and 3, providing that there are 4 rotating elements 125a, 125b, 125a and 125b', mounted on two shafts 126 and 126' arranged in a symmetrical way with respect to the axis x. This way, it is possible to further increase the possible motion transmission configurations between inlet and outlets, combining the translation of the shafts 126 and 126' along the respective axes x' and x" and disposing many rotating elements 125 in different angular positions.

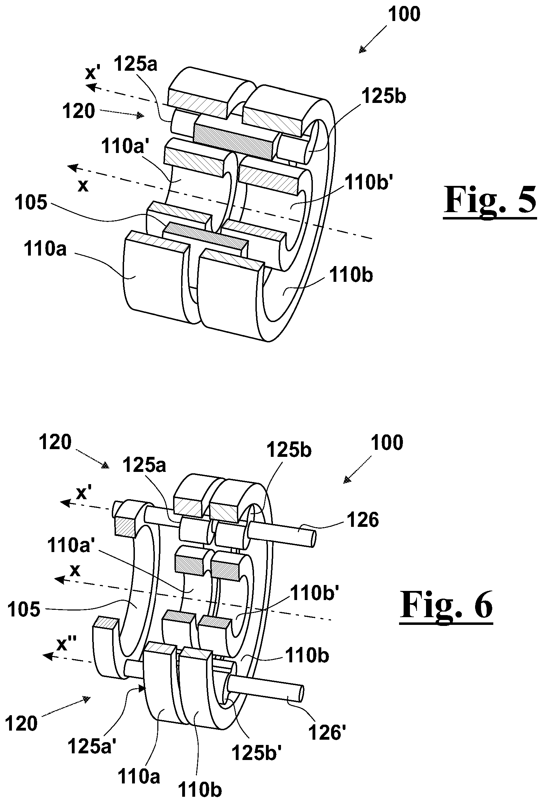

In the figures 5 and 6 other exemplary embodiments of the device 100 are shown that provide the presence of 4 receiving elements 110a, 110b, 110a', 110b', i.e. 4 outlets. In Fig. 5 a shaft 126 is provided, whereas in Fig. 6 two shafts 126 and 126' are provided.

By appropriately using the many combinations mentioned above, the embodiments of the device 100 shown in Figures 5 and 6 allow the element to be connected to each of the receiving elements 110 or to several receiving elements 110, both in one direction and in the other.

As evident, is also possible to provide devices 100 for the selective transmission of torques that have any number of outlets, and to connect the inlet to a predetermined number of such outlets, simply combining and appropriately arranging the connection means 120 described in the embodiments of Figs. 1 to 6.

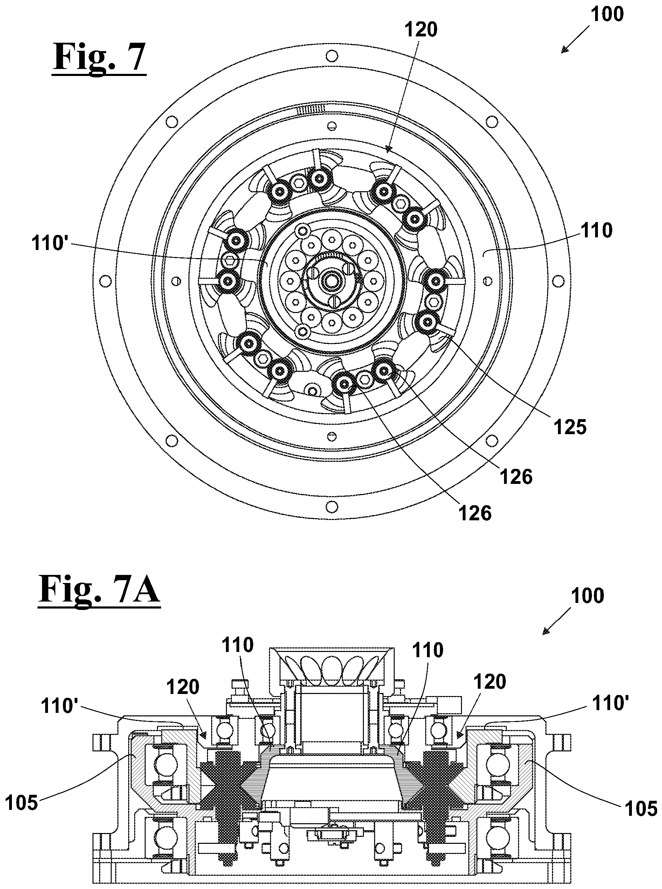

In the figures 7 and 7A a possible mechanical embodiment of the device 100 is shown. As shown, in this exemplary embodiment the connection means 120 comprises a plurality of shafts 126, on each of which a respective "C" type connecting element 125 is arranged.

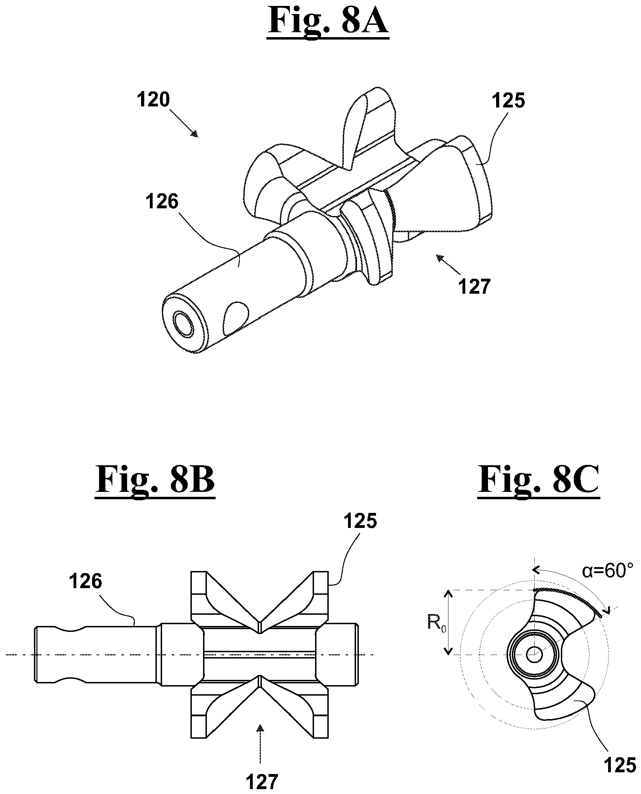

In Figs. 8A to 8C, the connection means 120 usable in the device 100 of Figs. 7 and 7A is shown.

In particular, Fig. 8C clearly shows that it is a "C" type rotating element 125, whereas Figs. 8A and 8B show that the element comprises a groove 127 able to allow a more stable assembly of the rotating element to the inside the device 100 of Figs. 7 and 7A.

Furthermore, in Fig. 8C some possible geometric parameters are shown, such as the opening angle $\alpha$ = 60° and the curved logarithmic spiral shape, marked with thicker line. In particular, this curve has equation:

$$R = R_0 * e^{\wedge}(0.158391919 * \alpha)$$

where $R_0$ is shown graphically in the figure.

The foregoing description some exemplary specific embodiments will so fully reveal the invention according to the conceptual point of view, so that others, by applying current knowledge, will be able to modify and/or adapt in various applications the specific exemplary embodiments without further research and without parting from the invention, and, accordingly, it is meant that such adaptations and modifications will have to be considered as equivalent to the specific embodiments. The means and the materials to realise the different functions described herein could have a different nature without, for this reason, departing from the field of the invention. It is to be understood that the phraseology or terminology that is employed herein is for the purpose of description and not of limitation.

**Claims**

1. A device (100) for the selective transmission of torques, said device (100) comprising:

   - an inlet arranged to provide an inlet torque $Q$, said inlet comprising a transmission element (105) arranged to rotate with speed $\omega$ about a rotation axis $x$;
   - a predetermined number $m$ of outlets arranged to express, respectively, outlet torques $T_i$, with $i = 1, 2, \dots, m$, each outlet comprising a receiving element (110,110',110a,110b, 110a',110b') arranged to rotate with speed $\vartheta_i$ about said rotation axis $x$;
   - a connection means (120) arranged to pass between a disengagement configuration and an engagement configuration, in said disengagement configuration said inlet being disengaged by said or each outlet in such a way that $Q \neq T_i$ and $\omega \neq \vartheta_i$, in said engagement configuration said inlet being engaged to a number $n$ of outlets, with $1 \leq n \leq m$, and said transmission element (105) being connected by friction to a number $n$ of respective receiving elements (110,110',110a,110b,110a',110b') in such a way that $Q = \sum_{i=1}^{n} T_i$ and $\omega = \vartheta_1 = \vartheta_2 = \cdots = \vartheta_n$;

   said device (100) further comprising at least:

   - a first outlet arranged to express an outlet torque $T_1$, said first outlet comprising a first receiving element (110) arranged to rotate with speed $\vartheta_1$ about said rotation axis $x$;
   - a second outlet arranged to express an outlet torque $T_2$, said second outlet comprising a second receiving element (110') arranged to rotate with speed $\vartheta_2$ about said rotation axis $x$.

   said device (100) **characterized in that** said connection means (120) comprise at least one rotating element (125,125a,125b) engaged to said transmission element (105) and arranged to rotate about a rotation axis $x'$ for causing said device (100) to pass between said disengagement configuration, wherein said or each rotating element (125,125a,125b) is not in contact with said or each receiving element (110,110',110a,110b,110a',110b'), and said engagement configuration, wherein said or each rotating element (125,125a,125b) is clamped by friction to said or each receiving element (110,110',110a,110b,110a',110b').

2. The device (100), according to claim 1, wherein said or each rotating element (125,125a,125b) has at least one profile having a logarithmic spiral shape.

3. The device (100), according to claim 1, wherein in said engagement configuration said connection means (120) is adapted to be disposed, alternatively, in:

   - a first position, where said transmission element (105) is clamped by friction to said first receiving element (110) in such a way that $Q = T_1$ and $\omega = \vartheta_1$;
   - a second position, where said transmission element (105) is clamped by friction to said second receiving element (110') in such a way that $Q = T_2$ and $\omega = \vartheta_2$;
   - a third position, where said transmission element (105) is clamped by friction both to said first receiving element (110) and to said second receiving element (110') in such a way that $Q = T_1 + T_2$ and $\omega = \vartheta_1 = \vartheta_2$.

4. The device (100), according to claim 1 or 3, wherein said transmission element (105), said first receiving element (110) and said second receiving element (110') are concentric annular elements and wherein said transmission element (105) is located between said first receiving element (110) and said second receiving element (110').

5. The device (100), according to claim 3, wherein said connection means (120) comprise a first rotating element (125a) and a second rotating element (125b) arranged to rotate about said rotation axis $x'$ in such a way that:

   - in said first position said first rotating element (125a) is clamped by friction to said first receiving element (110);
   - in said second position said first rotating element (125a) is clamped by friction to said second receiving element (110');
   - in said third position said second rotating element (125b) is clamped by friction to said first receiving element (110) and with said second receiving element (110').

6. The device (100), according to claim 5, wherein said connection means (120) also comprises at least one shaft (126) on which said first rotating element (125a) and said second rotating element (125b) are arranged, said shaft (126) arranged to carry out a roto-translational motion with respect to said rotation axis x' for bringing alternatively, said rotating elements (125a,125b) in said first, second and third position.

7. The device (100), according to claim 6, wherein said connection means (120) comprises at least two shafts (126,126').

8. The device (100), according to any of claims from 1 to 7, wherein said or each outlet is connected to at least one rotational joint arranged to allow a relative rotation between two robotic links.

**Patentansprüche**

1. Vorrichtung (100) zur selektiven Übertragung von Drehmomenten, wobei die Vorrichtung (100) umfasst:

   - einen Eingang, der so angeordnet ist, dass er ein Eingangsdrehmoment $Q$ bereitstellt, wobei der Eingang ein Übertragungselement (105) umfasst, das so angeordnet ist, dass es sich mit einer Geschwindigkeit $\omega$ um eine Drehachse $x$ dreht;
   - eine vorbestimmte Anzahl $m$ von Ausgängen, die so angeordnet sind, dass sie jeweils Ausgangsdrehmomente $T_i$ ausdrücken, wobei $i = 1, 2, ..., m,$ wobei jeder Ausgang ein Aufnahmeelement (110, 110', 1 10a, 1 10b, 1 10a', 1 10b') umfasst, das so angeordnet ist, dass es sich mit einer Geschwindigkeit $\vartheta_i$ um die Drehachse x dreht;
   - ein Verbindungsmittel (120), das so angeordnet ist, dass es zwischen einer Lösekonfiguration und einer Eingriffskonfiguration verläuft, wobei in der Lösekonfiguration der Eingang von dem oder jedem Ausgang derart gelöst ist, dass $Q \neq T_i$ und $\omega \neq \vartheta_i$, wobei in der Eingriffskonfiguration der Eingang mit einer Anzahl $n$ von Ausgängen in Eingriff steht, wobei $1 \leq n \leq m,$ und das Übertragungselement (105) durch Reibung mit einer Anzahl $n$ entsprechender Aufnahmeelemente (110, 110', 110a, 110b, 110a', 110b') derart verbunden ist, dass $Q = \Sigma_{i=1}^{n} T_i$ und $\omega = \vartheta_1 = \vartheta_2 = \cdots = \vartheta_n;$ wobei die Vorrichtung (100) ferner zumindest umfasst:

   - einen ersten Ausgang, der so angeordnet ist, dass er ein Ausgangsdrehmoment $T_1$ ausdrückt, wobei der erste Ausgang ein erstes Aufnahmeelement (110) umfasst, das so angeordnet ist, dass es sich mit der Geschwindigkeit $\vartheta_1$ um die Drehachse $x$ dreht;
   - einen zweiten Ausgang, der so angeordnet ist, dass er ein Ausgangsdrehmoment $T_2$ ausdrückt, wobei der zweite Ausgang ein zweites Aufnahmeelement (110') umfasst, das so angeordnet ist, dass es sich mit einer Geschwindigkeit $\vartheta_2$ um die Drehachse $x$ dreht,

   wobei die Vorrichtung (100) **dadurch gekennzeichnet ist, dass** das Verbindungsmittel (120) mindestens ein Drehelement (125, 125a, 125b) umfasst, das mit dem Übertragungselement (105) in Eingriff steht und so angeordnet ist, dass es sich um eine Drehachse $x'$ dreht, um die Vorrichtung (100) zu veranlassen, zwischen der Lösekonfiguration, wobei das oder jedes Drehelement (125, 125a, 125b) nicht in Kontakt mit dem oder jedem Aufnahmeelement (110, 110', 110a, 110b, 110a', 110b') ist, und der Eingriffskonfiguration zu verlaufen, wobei das oder jedes Drehelement (125, 125a, 125b) durch Reibung an dem oder jedem Aufnahmeelement (110, 110', 110a, 110b, 110a', 110b') festgeklemmt ist.

2. Vorrichtung (100) nach Anspruch 1, wobei das oder jedes Drehelement (125, 125a, 125b) mindestens ein Profil mit einer logarithmischen Spiralform aufweist.

3. Vorrichtung (100) nach Anspruch 1, wobei in der Eingriffskonfiguration das Verbindungsmittel (120) so angepasst ist, dass es alternativ angeordnet wird in:

   - einer ersten Position, in der das Übertragungselement (105) durch Reibung an dem ersten Aufnahmeelement (110) derart festgeklemmt ist, dass $Q = T_1$ und $\omega = \vartheta_1;$
   - einer zweiten Position, in der das Übertragungselement (105) durch Reibung an dem zweiten Aufnahmeelement (110') derart festgeklemmt ist, dass $Q = T_2$ und $\omega = \vartheta_2;$
   - einer dritten Position, in der das Übertragungselement (105) durch Reibung sowohl an dem ersten Aufnahmeelement (110) als auch an dem zweiten Aufnahmeelement (110') derart festgeklemmt ist, dass $Q = T_1 + T_2$ und $\omega = \vartheta_1 = \vartheta_2.$

4. Vorrichtung (100) nach Anspruch 1 oder 3, wobei das Übertragungselement (105), das erste Aufnahmeelement (110) und das zweite Aufnahmeelement (110') konzentrische ringförmige Elemente sind und wobei sich das Übertragungselement (105) zwischen dem ersten Aufnahmeelement (110) und dem zweiten Aufnahmeelement (110') befindet.

**5.** Vorrichtung (100) nach Anspruch 3, wobei das Verbindungsmittel (120) ein erstes Drehelement (125a) und ein zweites Drehelement (125b) umfasst, die so angeordnet sind, dass sie sich um die Drehachse $x'$ derart drehen, dass:

- in der ersten Position das erste Drehelement (125a) durch Reibung an dem ersten Aufnahmeelement (110) festgeklemmt ist;
- in der zweiten Position das erste Drehelement (125a) durch Reibung an dem zweiten Aufnahmeelement (110') festgeklemmt ist;
- in der dritten Position das zweite Drehelement (125b) durch Reibung an dem ersten Aufnahmeelement (110) und mit dem zweiten Aufnahmeelement (110') festgeklemmt ist.

**6.** Vorrichtung (100) nach Anspruch 5, wobei das Verbindungsmittel (120) auch mindestens eine Welle (126) umfasst, auf der das erste Drehelement (125a) und das zweite Drehelement (125b) angeordnet sind, wobei die Welle (126) so angeordnet ist, dass sie eine Dreh-Translationsbewegung in Bezug auf die Drehachse $x'$ ausführt, um abwechselnd die Drehelemente (125a, 125b) in die erste, zweite und dritte Position zu bringen.

**7.** Vorrichtung (100) nach Anspruch 6, wobei das Verbindungsmittel (120) mindestens zwei Wellen (126, 126') umfasst.

**8.** Vorrichtung (100) nach einem der Ansprüche 1 bis 7, wobei der oder jeder Ausgang mit mindestens einem Drehgelenk verbunden ist, das so angeordnet ist, dass es eine relative Drehung zwischen zwei Roboterverbindungen ermöglicht.

**Revendications**

**1.** Dispositif (100) de transmission sélective de couples, ledit dispositif (100) comprenant :

- une entrée agencée pour fournir un couple d'entrée $Q$, ladite entrée comprenant un élément de transmission (105) agencé pour tourner à une vitesse $\omega$ autour d'un axe de rotation $x$ ;
- un nombre prédéterminé $m$ de sorties agencées pour exprimer, respectivement, des couples de sortie $T_i$, avec $i = 1, 2, ..., m,$ chaque sortie comprenant un élément de réception (110, 110', 110a, 110b, 1 10a', 110b',) agencé pour tourner à la vitesse $\vartheta_i$ autour dudit axe de rotation $x$ ;
- un moyen de connexion (120) agencé pour passer entre une configuration de désengagement et une configuration d'engagement, dans ladite configuration de désengagement ladite entrée étant désengagée par ladite ou chaque sortie de telle sorte que $Q \neq T_i$ et $\omega \neq \vartheta_i$, dans ladite configuration d'engagement ladite entrée étant engagée avec un nombre $n$ de sorties, avec $1 \leq n \leq m$, et ledit élément de transmission (105) étant connecté par friction à un nombre $n$ d'éléments de réception respectifs (110, 110', 110a, 110b, 110a', 110b',) de telle sorte que

$$Q = \Sigma_{i=1}^{n} \, T_i \quad \text{et } \omega = \vartheta_1 = \vartheta_2 = \cdots = \vartheta_n ;$$

ledit dispositif (100) comprenant en outre au moins :

- une première sortie agencée pour exprimer un couple de sortie $T_1$, ladite première sortie comprenant un premier élément de réception (110) agencé pour tourner à la vitesse $\vartheta_1$ autour dudit axe de rotation $x$ ;
- une seconde sortie agencée pour exprimer un couple de sortie $T_2$, ladite seconde sortie comprenant un second élément de réception (110') agencé pour tourner à la vitesse $\vartheta_2$ autour dudit axe de rotation $x$, ledit dispositif (100) **caractérisé en ce que** ledit moyen de connexion (120) comprend au moins un élément rotatif (125, 125a, 125b) engagé avec ledit élément de transmission (105) et agencé pour tourner autour d'un axe de rotation $x'$ pour amener ledit dispositif (100) à passer entre ladite configuration de dégagement, dans laquelle ledit ou chaque élément rotatif (125, 125a, 125b) n'est pas en contact avec ledit ou chaque élément de réception (110, 110', 110a, 110b, 110a', 110b'), et ladite configuration d'engagement, dans laquelle ledit ou chaque élément rotatif (125, 125a, 125b) est serré par friction sur ledit ou chaque élément de réception (110, 110', 110a, 110b, 110a', 110b').

**2.** Dispositif (100) selon la revendication 1, dans lequel ledit ou chaque élément rotatif (125, 125a, 125b) comporte au moins un profil comportant une forme de spirale logarithmique.

**3.** Dispositif (100) selon la revendication 1, dans lequel, dans ladite configuration d'engagement, ledit moyen de connexion (120) est adapté pour être disposé, alternativement, dans :

- une première position, où ledit élément de transmission (105) est serré par friction sur ledit premier élément de réception (110) de telle sorte que $Q = T_1$ et $\omega = \vartheta_1$ ;

- une deuxième position, où ledit élément de transmission (105) est serré par friction sur ledit second élément de réception (110') de telle sorte que $Q = T_2$ et $\omega = \vartheta_2$ ;
- une troisième position, où ledit élément de transmission (105) est serré par friction à la fois sur ledit premier élément de réception (110) et sur ledit second élément de réception (110') de telle sorte que $Q = T_1 + T_2$ et $\omega = \vartheta_1 = \vartheta_2$.

4. Dispositif (100) selon la revendication 1 ou 3, dans lequel ledit élément de transmission (105), ledit premier élément de réception (110) et ledit second élément de réception (110') sont des éléments annulaires concentriques et dans lequel ledit élément de transmission (105) est situé entre ledit premier élément de réception (110) et ledit second élément de réception (110').

5. Dispositif (100) selon la revendication 3, dans lequel ledit moyen de connexion (120) comprend un premier élément rotatif (125a) et un second élément rotatif (125b) agencés pour tourner autour dudit axe de rotation $x'$ de telle sorte que :

- dans ladite première position, ledit premier élément rotatif (125a) soit serré par friction sur ledit premier élément de réception (110) ;
- dans ladite deuxième position, ledit premier élément rotatif (125a) est serré par friction sur ledit second élément de réception (110') ;
- dans ladite troisième position, ledit second élément rotatif (125b) est serré par friction sur ledit premier élément de réception (110) et avec ledit second élément de réception (110').

6. Dispositif (100) selon la revendication 5, dans lequel ledit moyen de connexion (120) comprend également au moins un arbre (126) sur lequel ledit premier élément rotatif (125a) et ledit second élément rotatif (125b) sont agencés, ledit arbre (126) agencé pour effectuer un mouvement de roto-translation par rapport audit axe de rotation $x'$ pour amener alternativement lesdits éléments rotatifs (125a, 125b) dans lesdites première, deuxième et troisième positions.

7. Dispositif (100) selon la revendication 6, dans lequel ledit moyen de connexion (120) comprend au moins deux arbres (126, 126').

8. Dispositif (100), selon l'une quelconque des revendications 1 à 7, dans lequel ladite ou chaque sortie est reliée à au moins une articulation rotative agencée pour permettre une rotation relative entre deux liaisons robotiques.

**100**

**120**

**125**

**110**

**105**

x'

x

## <u>Fig. 1</u>

**100**

**125**

**110**

**105**

x'

x

## <u>Fig. 1A</u>

**Fig. 1B**

**Fig. 1C**

**Fig. 2**

**Fig. 2A**

**Fig. 2B**

**Fig. 2C**

## Fig. 3

100

120   125a   125b   126

X'

X

110

110'

105

## Fig. 3A

120   126

125a

125b

X'

## Fig. 4

120   125a   125b   126

X'

X

110

110'   100

105

126'

X''

120   125b'

125a'

**Fig. 5**

**Fig. 6**

**Fig. 7**

100

120

110'

110

125

126

126

**Fig. 7A**

100

110

110

120

110'

120

110'

105

105

# Fig. 8A

**120**

**125**

**126**

**127**

# Fig. 8B

# Fig. 8C

**125**

**126**

**127**

$\alpha=60°$

$R_0$

**125**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0213291 A
- US 4373407 A
- AT 396972
- US 2003183473 A